(19) Europäisches Patentamt / European Patent Office / Office européen des brevets

(11) **EP 3 914 882 B1**

(12) **FASCICULE DE BREVET EUROPEEN**

(45) Date de publication et mention
de la délivrance du brevet:
**08.11.2023 Bulletin 2023/45**

(21) Numéro de dépôt: **20700940.8**

(22) Date de dépôt: **23.01.2020**

(51) Classification Internationale des Brevets (IPC):
*G01F 23/296* *(2022.01)*

(52) Classification Coopérative des Brevets (CPC):
**G01F 23/2962; G01F 23/2965**

(86) Numéro de dépôt international:
**PCT/EP2020/051570**

(87) Numéro de publication internationale:
**WO 2020/152244 (30.07.2020 Gazette 2020/31)**

(54) **SYSTÈME ET PROCÉDÉ DE MESURE PAR ONDES ACOUSTIQUES DU NIVEAU DE REMPLISSAGE D'UN RÉSERVOIR DE FLUIDE**

SYSTEM UND VERFAHREN ZUR MESSUNG DES FÜLLSTANDES EINES FLUIDBEHÄLTERS MITTELS AKUSTISCHER WELLEN

SYSTEM AND METHOD FOR MEASURING THE FILLING LEVEL OF A FLUID CONTAINER BY MEANS OF ACOUSTIC WAVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2019 FR 1900623**

(43) Date de publication de la demande:
**01.12.2021 Bulletin 2021/48**

(73) Titulaire: **Dehon SAS**
**75011 Paris (FR)**

(72) Inventeur: **ANQUETIL, Gérald**
**95260 BEAUMONT SUR OISE (FR)**

(74) Mandataire: **Argyma**
**14 Boulevard de Strasbourg**
**31000 Toulouse (FR)**

(56) Documents cités:
**WO-A1-2009/026672 GB-A- 2 281 622**
**GB-A- 2 302 946 US-A1- 2016 320 226**

## Description

### DOMAINE TECHNIQUE DE L'INVENTION

La présente invention concerne le domaine de la mesure du niveau de remplissage d'un réservoir de fluide, et plus précisément l'utilisation d'ondes acoustiques pour mesurer le niveau de remplissage d'un réservoir de fluide. Bien que la présente invention puisse être utilisée dans de nombreux domaines, elle trouve une application particulière dans celui des installations de type frigorifique ou de climatisation, utilisées, non limitativement, dans le domaine de la distribution de produits frais et surgelés.

### ETAT DE LA TECHNIQUE

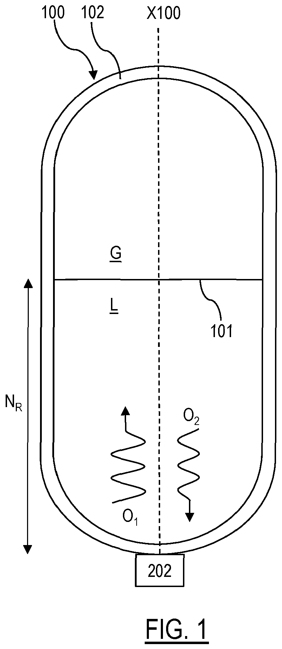

Les installations de type frigorifique ou de climatisation sont en effet alimentées par des fluides en partie stockés dans des réservoirs sous pression, qui sont généralement opaques et clos. Sur la figure 1 est ainsi représenté un réservoir 100 cylindrique d'axe vertical X100, comprenant une enveloppe 102 et stockant un liquide L et un gaz G séparés par une interface 101 définissant le niveau de remplissage $N_R$ en liquide L du réservoir 100. Ce niveau de remplissage $N_R$ ne peut pas être déterminé de manière visuelle.

On connait dans l'art antérieur par la demande de brevet FR2949559A1, un système de mesure du niveau de remplissage de liquide d'un réservoir permettant de donner instantanément la valeur de ce niveau, quelles que soient la forme du réservoir, l'orientation du réservoir (verticale ou horizontale) et la nature du liquide qu'il contient, tout en étant fiable et peu onéreux. Ce dispositif de mesure comporte une colonne extérieure disposée verticalement et reliée au réservoir au travers de conduits flexibles. En vertu du principe des vases communicants, le niveau du liquide s'équilibre à la même hauteur dans la colonne extérieure et dans le réservoir. Ce dispositif de mesure comporte en outre des moyens de pesage maintenant la colonne extérieure, afin de mesurer le poids de la colonne extérieure en fonction du niveau de liquide. Ce dispositif de mesure comporte par ailleurs un calculateur configuré pour déterminer le niveau de liquide dans la colonne extérieure à partir notamment du poids mesuré de la colonne extérieure, et par conséquent le niveau de remplissage du réservoir. Ce système de mesure nécessite cependant que le réservoir comporte un orifice supérieur et un orifice inférieur pour que le réservoir et la colonne extérieure soient en communication. En outre, il est nécessaire de vidanger le réservoir lors du raccordement de la colonne extérieure. Les fluides utilisés dans les installations de type frigorifique ou de climatisation étant par ailleurs nocifs pour l'environnement et/ou la santé, cette vidange est également délicate à opérer.

Pour éliminer ces inconvénients, le niveau de remplissage d'un réservoir de fluide peut être mesuré de manière non intrusive en utilisant des ondes acoustiques dans le domaine des ultrasons. Cette mesure est basée sur les différences de propriétés physiques des ondes acoustiques se propageant dans deux fluides monophasiques différents, à savoir un liquide et un gaz, deux liquides différents, ou deux gaz différents. A titre d'exemple, la vitesse de propagation d'une onde acoustique est plus élevée dans les liquides que dans les gaz. Cette mesure utilise de plus la réflexion et la réfraction des ondes acoustiques. Selon ces principes, lorsqu'une onde acoustique se propageant dans un premier fluide monophasique, dite onde incidente, rencontre une interface avec un second fluide monophasique, une partie de l'onde acoustique, dite onde réfractée, se propage dans le second fluide monophasique et l'autre partie, dite onde réfléchie, se propage en sens inverse dans le premier fluide monophasique. On considère pour la suite que le premier fluide monophasique est un réfrigérant en phase liquide, dont on souhaite connaître le niveau de remplissage, et que le second fluide monophasique est ce réfrigérant en phase gazeuse, ce qui correspond au cas le plus courant.

Comme illustré sur la figure 1, on connaît dans l'art antérieur par la demande de brevet US2012259560A1 un premier procédé de mesure par ondes acoustiques permettant de déterminer le niveau de remplissage $N_R$ de liquide L d'un réservoir 100, quelles que soient l'orientation du réservoir 100 et la nature du liquide L qu'il contient. Ce premier procédé comporte une étape d'émission d'une onde acoustique incidente $O_1$ dans le liquide L, de la partie inférieure de l'enveloppe 102 et suivant la verticale, et une étape de réception d'une onde acoustique réfléchie $O_2$, générée par la réflexion de l'onde acoustique incidente $O_1$ sur l'interface 101. Ces deux ondes acoustiques sont respectivement émises et reçue par des transducteurs piézoélectriques 202. Le temps s'écoulant entre l'émission de l'onde acoustique incidente $O_1$ et la réception de l'onde acoustique réfléchie $O_2$ par les transducteurs piézoélectriques 202, connu de l'homme du métier sous le terme de « temps de transit », permet de déterminer le niveau de remplissage $N_R$ du réservoir 100. Ce procédé présente toutefois l'inconvénient d'être peu précis et de n'être utilisable que pour un réservoir dont la partie inférieure de l'enveloppe 102 est plane afin de permettre de recevoir l'onde acoustique réfléchie $O_2$.

Comme illustré sur la figure 2, on connait par ailleurs par la demande de brevet US2016320226A1 un deuxième procédé de mesure du niveau de remplissage $N_R$ d'un réservoir 100, également basé sur le temps de transit des ondes acoustiques. A la différence du premier procédé, ce deuxième procédé est mis en oeuvre en émettant une onde acoustique incidente $O_1$ depuis la partie latérale de l'enveloppe 102 par un premier transducteur piézoélectrique 203, avec un angle $\beta$ par rapport à l'horizontale et à une hauteur h suffisante pour qu'elle se propage dans le gaz G avant d'atteindre l'interface 101. L'onde acoustique réfléchie $O_2$, générée par la ré-

flexion de l'onde acoustique incidente $O_1$ sur l'interface 101, est réceptionnée à la même hauteur h par un deuxième transducteur piézoélectrique 204. Ce deuxième procédé présente l'avantage de pouvoir être appliqué à toute nature de liquide L et pour des réservoirs dont la partie inférieure n'est pas plane. Toutefois, il présente l'inconvénient d'être peu précis. Par ailleurs, pour être fiable, il nécessite d'être appliqué à un réservoir 100 ayant des parois latérales planes. En outre, ce second procédé nécessite que la hauteur h des transducteurs piézoélectriques 203, 204 soit toujours supérieure au niveau de remplissage $N_R$. Cela est contraignant étant donné que le niveau de remplissage $N_R$ est inconnu avant la mesure,

Comme illustré sur la figure 3, on connait par la même demande de brevet US2016320226A1 un troisième procédé de mesure du niveau de remplissage $N_R$ d'un réservoir 100, basé quant à lui sur l'atténuation d'énergie acoustique. A la différence des deux premiers procédés, une onde acoustique incidente $O_1$ est émise par un premier transducteur piézoélectrique 205 de sorte à se propager verticalement dans la partie latérale de l'enveloppe 102. Cette onde acoustique incidente $O_1$ est émise à une hauteur d'émission $h_a$ supérieure au niveau de remplissage $N_R$ et est réceptionnée à une hauteur de réception $h_b$ inférieure au niveau de remplissage $N_R$ par un deuxième transducteur piézoélectrique 206. Durant sa propagation dans l'enveloppe 102, l'onde acoustique incidente $O_1$ perd une partie de son amplitude, qui est absorbée par le liquide L. Si le niveau de remplissage $N_R$ du réservoir 100 est élevé, l'amplitude de l'onde acoustique incidente $O_1$ diminue davantage lors de sa propagation que si le niveau de remplissage $N_R$ est faible. Son amplitude lors de sa réception permet alors de déterminer le niveau de remplissage $N_R$ du réservoir 100. Ce troisième procédé présente l'inconvénient d'être peu précis et peu fiable. Par ailleurs, il est uniquement applicable à un réservoir d'axe vertical. Enfin, il nécessite, comme le second procédé, que les hauteurs d'émission $h_a$ et de réception $h_b$ soient toujours respectivement inférieure et supérieure au niveau de remplissage $N_R$ qui est inconnu avant la mesure.

De manière analogue, on connaît par la demande de brevet US5755136A1 une émission d'une onde acoustique depuis une première paroi vers une deuxième paroi opposée de manière à mesurer, d'une part, l'atténuation acoustique sur un trajet aller-retour et, d'autre part, la réponse vibratoire de la première paroi. Les mesures conjuguées de l'atténuation acoustique et de la réponse vibratoire permettent de déterminer si un liquide est présent entre la première paroi et la deuxième paroi au niveau du lieu de mesure. Un tel procédé demeure complexe et long étant donné qu'il nécessite deux mesures indépendantes. Enfin, la mesure de l'atténuation acoustique est imprécise étant donné que la première paroi et la deuxième paroi ne sont généralement pas parfaitement planes et sont éloignées.

On connaît par la demande de brevet GB 2 302 946 A un procédé de mesure du niveau de remplissage d'un réservoir comprenant un élément piézoélectrique prévu pour être attaché à la paroi d'un réservoir pour générer un signal ultrasonore se propageant dans la paroi pour être ensuite transmis ou réfléchi par la face opposée de la paroi.

Il existe donc un besoin pour un système et un procédé de mesure du niveau de remplissage d'un réservoir de fluide qui soit précis et fiable, indépendant de la forme et de l'orientation du réservoir et indépendant de la nature des fluides contenus dans le réservoir.

## PRESENTATION DE L'INVENTION

L'invention concerne un système de mesure par ondes acoustiques du niveau de remplissage d'un réservoir, ledit réservoir stockant un premier fluide monophasique ayant des premières propriétés physiques et un second fluide monophasique ayant des secondes propriétés physiques, lesdites premières propriétés physiques comprenant une première masse volumique et lesdites secondes propriétés physiques comprenant une seconde masse volumique strictement inférieure à la première masse volumique de manière à ce que les fluides monophasiques soient superposés verticalement dans le réservoir, le premier fluide monophasique étant situé en partie inférieure du réservoir, le second fluide monophasique étant situé en partie supérieure du réservoir, ledit premier fluide monophasique et ledit second fluide monophasique étant séparés par une interface sensiblement horizontale, ledit réservoir comprenant une enveloppe s'étendant longitudinalement selon un axe, l'enveloppe comprenant une face interne en contact avec les fluides monophasiques et une face externe, l'enveloppe comportant une portion médiane cylindrique.

Le système de mesure est remarquable par le fait qu'il comprend :

- au moins trois transducteurs configurés pour être positionnés à des hauteurs verticales différentes sur la face externe de la portion cylindrique de l'enveloppe,

- chaque transducteur étant configuré, d'une part, pour émettre, à réception d'un premier signal électrique, une onde acoustique incidente à la face externe d'une paroi de l'enveloppe et d'autre part, pour émettre un second signal électrique, à réception d'une onde acoustique réfléchie, correspondant à la réflexion de l'onde acoustique incidente sur la face interne de ladite paroi, l'onde acoustique réfléchie n'ayant traversé que la paroi de l'enveloppe, le second signal électrique étant fonction de la différence d'énergie acoustique entre l'onde acoustique incidente et l'onde acoustique réfléchie et

- au moins un organe de calcul configuré pour déterminer, à partir des signaux électriques et des propriétés physiques des fluides monophasiques la présence du premier fluide monophasique à chaque hauteur verticale des transducteurs et en déduire le niveau de remplissage.

De manière avantageuse, grâce à l'invention, chaque transducteur permet de vérifier la présence du premier fluide monophasique à chaque hauteur par mesure d'une atténuation acoustique. L'utilisation d'une pluralité de transducteurs forme avantageusement une échelle de détection afin de déterminer l'interface entre les fluides monophasiques de manière discrète.

Contrairement à l'art antérieur qui enseigne de mesurer l'atténuation acoustique de manière directe dans un fluide, la présente invention vise une mesure indirecte en analysant l'atténuation acoustique de la paroi. De manière avantageuse, la demanderesse s'est aperçue que l'atténuation acoustique de la paroi dépend de la présence ou de l'absence de fluide sur la face interne de la paroi. En effet, lorsqu'une onde acoustique est réfléchie sur une interface quelconque, le fluide situé de l'autre côté de l'interface absorbe une partie de l'énergie de l'onde acoustique, ce qui diminue son amplitude. Grâce à l'invention, on détecte la présence d'un fluide indépendamment de la section du réservoir, ce qui est très avantageux.

De préférence, les transducteurs sont alignés selon une ligne dans un plan vertical. De manière avantageuse, les transducteurs sont reliés les uns avec les autres de manière à faciliter leur installation et leur câblage.

Selon un premier aspect, les transducteurs sont alignés selon une ligne rectiligne ou droite, en particulier, pour un réservoir vertical.

De préférence, les transducteurs sont configurés pour émettre des ondes acoustiques incidentes horizontales. Cela permet de manière avantageuse une détection par atténuation de l'énergie acoustique. L'atténuation d'énergie acoustique désigne une atténuation de l'amplitude de l'onde acoustique ou, autrement dit, de sa puissance acoustique.

Selon un deuxième aspect, les transducteurs sont alignés selon une ligne incurvée mais dans un même plan vertical pour un réservoir horizontal.

Selon l'invention, l'organe de calcul est configuré pour déterminer l'état d'un transducteur à partir de la différence d'énergie acoustique entre l'émission de l'onde acoustique incidente $O_1$ et la réception de l'onde acoustique réfléchie $O_2$ qu'il a reçue.

De préférence, la différence d'énergie acoustique est déterminée à partir de l'impédance acoustique des fluides monophasiques. De préférence, le système de mesure comporte un capteur de température afin de déterminer l'impédance acoustique à prendre en compte, celle-ci étant fonction de la température du fluide.

De préférence, l'organe de calcul est configuré pour comparer les signaux électriques à une base de données comportant les atténuations acoustiques de référence des fluides monophasiques pour ledit réservoir pour déterminer la présence du premier fluide monophasique à chaque hauteur verticale des transducteurs. De préférence encore, l'organe de calcul est configuré pour comparer la différence d'énergie acoustique au niveau de chaque transducteur à une base de données comportant des atténuations acoustiques de référence des fluides monophasiques pour ledit réservoir.

Selon l'invention, l'organe de calcul étant configuré pour déterminer, pour chaque transducteur, un état inférieur en présence du premier fluide monophasique ou un état supérieur en l'absence du premier fluide monophasique, l'organe de calcul est configuré pour déterminer la hauteur de l'interface à partir de la hauteur des deux transducteurs successifs dont l'un est à un état inférieur et l'autre à un état supérieur.

Selon un aspect de l'invention, les transducteurs sont configurés pour émettre, en outre de l'onde incidente, une onde incidente complémentaire dans la paroi de l'enveloppe du réservoir, la trajectoire de cette onde incidente complémentaire étant orientée d'un angle de mesure β par rapport à celle de l'onde acoustique incidente de sorte à générer une onde acoustique réfléchie complémentaire qui est réceptionnée par un transducteur adjacent au transducteur ayant émis les ondes incidentes.

De manière préférée, l'organe de calcul est configuré pour mesurer l'atténuation acoustique au niveau de chaque transducteur à une base de données comportant les atténuations acoustiques de référence des fluides monophasiques pour ledit réservoir et pour ledit angle de mesure β.

L'invention concerne également un ensemble d'un réservoir et d'un système de mesure tel que présenté précédemment.

L'invention concerne en outre un procédé de mesure par ondes acoustiques du niveau de remplissage d'un réservoir, mis en oeuvre au moyen du système de mesure tel que présenté précédemment, le procédé comprenant :

une étape d'émission par chaque transducteur d'une onde acoustique incidente à la face externe d'une paroi de l'enveloppe suite à la réception d'un premier signal électrique,

- une étape de réception d'une onde acoustique réfléchie par chaque transducteur générée par la réflexion de l'onde acoustique incidente sur la face interne de ladite paroi, l'onde acoustique réfléchie n'ayant traversé que la paroi de l'enveloppe, le second signal électrique étant fonction de la différence d'énergie acoustique entre l'onde acoustique incidente et l'onde acoustique réfléchie.

- une étape de détermination de la présence du premier fluide monophasique à chaque hauteur verticale des transducteurs à partir des signaux électriques et des propriétés physiques des fluides monophasiques et

- une étape de détermination du niveau de remplissage en fonction de la présence du premier fluide monophasique à chaque hauteur verticale des transducteurs.

De manière préférée, les transducteurs sont commandés de manière simultanée.

De préférence, les ondes incidentes appartiennent au domaine des ultrasons et sont, de préférence, des impulsions sinusoïdales.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

La figure 1 est une représentation schématique d'un premier procédé de mesure par ondes acoustiques du niveau de remplissage d'un réservoir de fluide selon l'art antérieur,

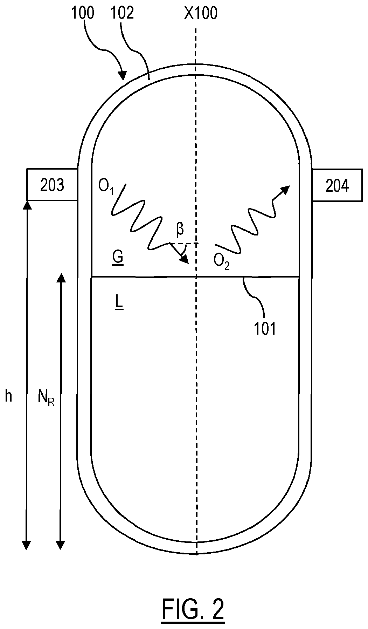

La figure 2 est une représentation schématique d'un second procédé de mesure par ondes acoustiques du niveau de remplissage d'un réservoir de fluide selon l'art antérieur,

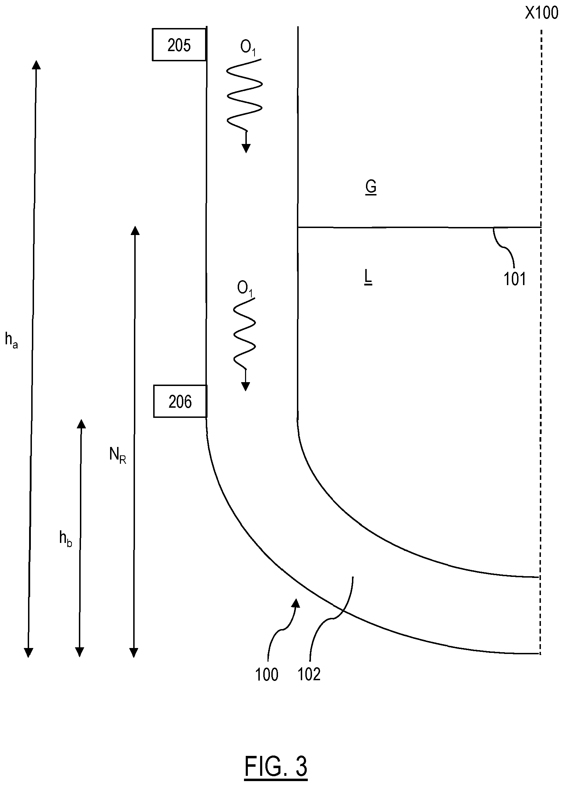

La figure 3 est une représentation schématique d'un troisième procédé de mesure par ondes acoustiques du niveau de remplissage d'un réservoir de fluide selon l'art antérieur,

La figure 4 est une représentation schématique du procédé de mesure par onde acoustique lors de la détection de la présence d'un fluide à plusieurs hauteurs verticales pour un réservoir horizontal,

La figure 5 est une vue en coupe transversale du réservoir de la figure 4,

Les figures 6A et 6B sont des représentations schématiques de l'onde incidente émise à la face externe de la paroi et de l'onde réfléchie par la face interne de ladite paroi à plusieurs hauteurs verticales,

Les figures 7 et 8 sont des représentations schématiques rapprochées d'une émission d'une onde incidente horizontale et d'une onde incidente complémentaire,

La figure 9 est une représentation schématique du procédé de mesure par onde acoustique lors de l'émission d'une onde incidente complémentaire,

La figure 10 est une représentation schématique du procédé de mesure par onde acoustique lors de la détection de la présence d'un fluide à plusieurs hauteurs verticales pour un réservoir vertical et

La figure 11 est une représentation schématique des étapes du procédé de mesure par onde acoustique du niveau de remplissage d'un réservoir de fluide.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

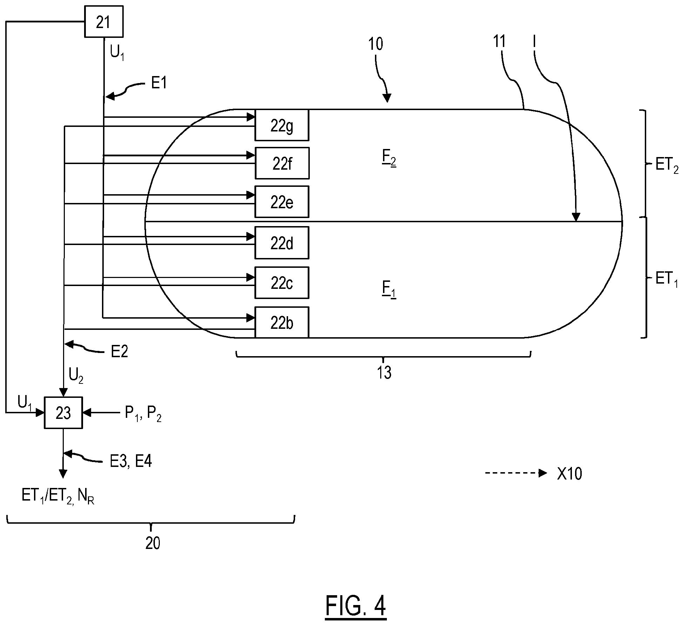

En référence à la figure 4, il est représenté de manière schématique un système de mesure 20 par ondes acoustiques du niveau de remplissage $N_R$ d'un réservoir 10.

Par la suite, la direction verticale est définie comme la direction de l'axe de gravité et la direction horizontale comme la direction perpendiculaire à la verticale. Les termes « bas », « haut », « supérieur » et « inférieur » sont déterminés par rapport à la direction verticale.

Comme illustré sur la figure 4, il est représenté un réservoir 10 stockant un premier fluide monophasique $F_1$, un réfrigérant en phase liquide par exemple, et un second fluide monophasique $F_2$, dans cet exemple du réfrigérant en phase gazeuse, en particulier, le même.

Le premier fluide monophasique $F_1$ possède des premières propriétés physiques $P_1$ notamment une première masse volumique $\rho_1$ et le second fluide monophasique $F_2$ possède des secondes propriétés physiques P1 notamment une seconde masse volumique $\rho2$ strictement inférieure à la première masse volumique $\rho1$ de sorte que le premier fluide monophasique F1 est situé en partie inférieure du réservoir 10 et que le second fluide monophasique F2 est situé en partie supérieure du réservoir 10. Les vitesses de propagation théoriques V1, V2 d'une onde acoustique dans les fluides monophasiques F1, F2 sont également connues. Comme cela sera présenté par la suite, le réservoir 10 comporte en outre une sonde de température (non représentée) de manière à déterminer la température $T_1$, $T_2$ des fluides $F_1$, $F_2$.

Comme illustré à la figure 4, le premier fluide monophasique $F_1$ et le second fluide monophasique $F_2$ sont ainsi séparés par une interface I sensiblement horizontale. La hauteur de cette interface I correspond au niveau de remplissage $N_R$ du réservoir 10 en premier fluide monophasique $F_1$. Dans cet exemple, le premier fluide monophasique $F_1$ et le second fluide monophasique $F_2$ sont respectivement un liquide et un gaz mais il va de soi qu'ils pourraient se présenter sous la forme de deux gaz différents ou encore de deux liquides différents.

Le réservoir 10 s'étend longitudinalement selon un axe X10 qui est, dans cette première forme de réalisation, horizontal. Par souci de clarté et de concision, on désignera par la suite « réservoir vertical » un réservoir ayant un axe longitudinal s'étendant verticalement et par « réservoir horizontal » un réservoir ayant un axe longitudinal s'étendant horizontalement.

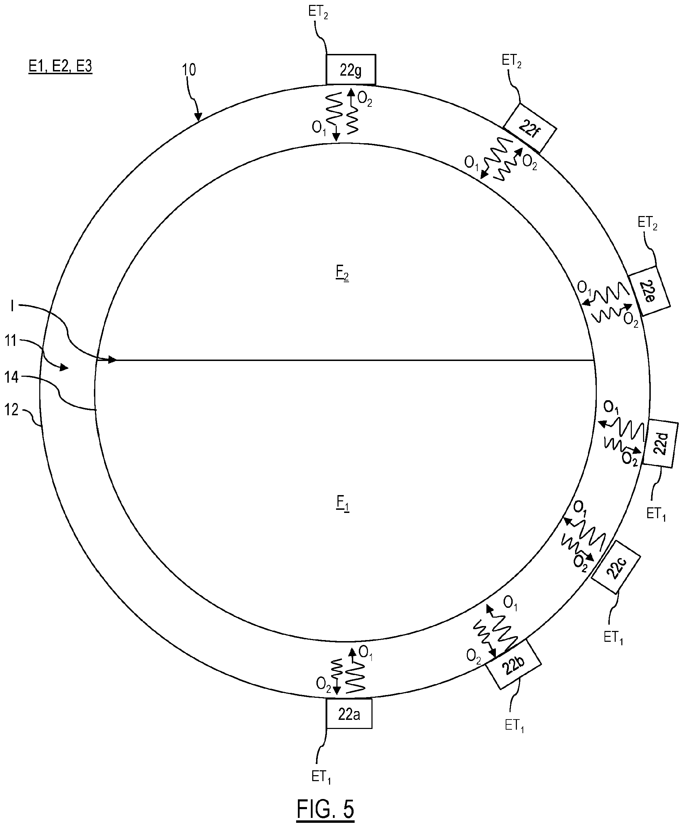

En référence à la figure 5, le réservoir 10 comprend une enveloppe 11 ayant une paroi comprenant une face interne 14 en contact avec les fluides monophasiques $F_1$, $F_2$ et une face externe 12 opposée à la face interne 14. Le réservoir 10 comporte deux extrémités et une portion cylindrique médiane 13 qui s'étend selon l'axe X10. Par la suite, il va être présenté une portion cylindrique médiane 13 de section annulaire, particulièrement adapté pour répartir les efforts de pression, mais il va de soi qu'elle pourrait être différente. Un tel réservoir 10 est connu de l'homme du métier et ne sera pas présenté de manière plus détaillée.

Il va dorénavant être présenté un système de mesure 20 du niveau de remplissage $N_R$ du réservoir 10 selon l'invention en référence aux figures 4 et 5.

Dans cet exemple, le système de mesure 20 comprend une pluralité de transducteurs 22a-22g positionnés sur le réservoir 10 à des hauteurs verticales différentes ainsi qu'un organe de commande 21 et un organe de calcul 23 qui sont reliés aux transducteurs 22a-22g.

Chaque transducteur 22a-22g est configuré, d'une part, pour émettre, à réception d'un premier signal électrique $U_1$, une onde acoustique incidente $O_1$ à la face externe 12 d'une paroi de l'enveloppe 11 et d'autre part, pour émettre un second signal électrique $U_2$, à réception d'une onde acoustique réfléchie $O_2$, correspondant à la réflexion de l'onde acoustique incidente O1 sur la face interne 14 de ladite paroi, l'onde acoustique réfléchie $O_2$ n'ayant traversé que la paroi de l'enveloppe 11, le second signal électrique $U_2$ étant fonction de la différence d'énergie acoustique entre l'onde acoustique incidente $O_1$ et l'onde acoustique réfléchie $O_2$. Autrement dit, contrairement à l'art antérieur qui enseigne de mesurer l'atténuation acoustique dans un fluide entre les parois de l'enveloppe 11, la présente invention propose de ne se concentrer que sur l'atténuation acoustique de la paroi de l'enveloppe 11, c'est-à-dire, dans l'épaisseur de la paroi. L'onde acoustique réfléchie $O_2$ est reçue plus rapidement que dans l'art antérieur et possède une puissance acoustique plus importante, ce qui facilite son traitement étant donné qu'elle a parcouru une distance plus courte. Cela augmente de manière importante la précision.

Contrairement à l'art antérieur qui enseigne de mesurer l'atténuation acoustique de manière directe dans un fluide, la présente invention vise une mesure indirecte en analysant l'atténuation acoustique de la paroi de l'enveloppe 11. De manière avantageuse, la demanderesse s'est aperçu que l'atténuation acoustique de la paroi de l'enveloppe 11 dépend de la présence ou de l'absence de fluide sur la face interne 14 de la paroi. De manière avantageuse, chaque transducteur 22 est du type piézoélectrique et permet de convertir un signal électrique en une contrainte mécanique (vibration) et réciproquement. Il va cependant de soi que d'autres types de transducteur 22a-22g pourraient être utilisés, par exemple, des céramiques PZT, des polymères PVDF, etc. De préférence, l'onde acoustique incidente $O_1$ est une impulsion sinusoïdale.

Chaque transducteur 22a-22g permet ainsi de mesurer l'atténuation acoustique entre l'onde incidente $O_1$ et l'onde réfléchie $O_2$ par la face interne 14 de la paroi de l'enveloppe 11.

Comme cela sera présenté par la suite, l'organe de calcul 23 est configuré pour déterminer, à partir des signaux électriques $U_1$-$U_2$ et des propriétés physiques P1-P2 des fluides monophasiques $F_1$-$F_2$ la présence du premier fluide monophasique $F_1$ à chaque hauteur verticale des transducteurs 22a-22g et en déduire le niveau de remplissage $N_R$.

Les transducteurs 22a-22g sont positionnés à des hauteurs verticales différentes de manière à détecter la présence du premier fluide monophasique $F_1$ à différentes hauteurs différentes et ainsi en déduire le niveau de remplissage $N_R$. Le nombre de transducteurs 22a-22g est avantageusement choisi en fonction de la précision souhaitée. Les transducteurs 22a-22g sont positionnés en contact avec la face externe 12 de la portion cylindrique 13 de l'enveloppe 11 de manière à émettre/recevoir de manière optimale dans la paroi de l'enveloppe 11.

L'organe de commande 21 se présente sous la forme d'une unité de calcul configurée pour émettre le premier signal électrique $U_1$ à des instants prédéterminés. A cet effet, l'organe de commande 21 comporte une horloge.

De manière analogue, l'organe de calcul 23 se présente sous la forme d'une unité de calcul configurée pour recevoir le deuxième signal électrique $U_2$ et déterminer l'instant de réception. A cet effet, l'organe de calcul 23 comporte une horloge.

De manière préférée, l'organe de commande 21 et l'organe de calcul 23 sont intégrés dans un même module de calcul, par exemple, une carte électronique. De manière préférée, le module de calcul comporte une batterie pour alimenter l'organe de commande 21, l'organe de calcul 23 et les transducteurs 22.

De manière préférée, le système de mesure 20 comporte en outre une unité de communication pour communiquer, de manière filaire ou sans fil, le niveau de remplissage NR qui a été déterminé. Cela est particulièrement avantageux lorsque le système de mesure comporte un dispositif de signalisation tel que présenté dans la demande de brevet FR1871656.

De manière préférée, le système de mesure 20 comporte un support flexible sur lequel sont montés les transducteurs 22a-22g. Les transducteurs 22a-22g sont ainsi positionnés de manière précise les uns par rapport aux autres, ce qui améliore la précision de la mesure de niveau de remplissage $N_R$. De manière préférée, le support flexible est relié au réservoir par collage, aimantation ou autre.

L'organe de calcul 23 est configuré pour déterminer la présence du premier fluide monophasique $F_1$ à chaque hauteur verticale des transducteurs 22a-22g à partir des signaux électriques $U_1$, $U_2$ de chaque transducteur 22a-22g. Par la suite, lorsqu'un transducteur 22a-22g détecte la présence du premier fluide monophasique $F_1$, celui-ci est considéré à un état inférieur $ET_1$ (présence de fluide) tandis qu'il est considéré à un état supérieur $ET_2$ dans le cas contraire (absence de fluide).

Ainsi, l'organe de calcul 23 permet de définir un premier groupe de transducteurs à l'état inférieur $ET_1$ et un deuxième groupe de transducteurs à l'état supérieur $ET_2$. L'organe de calcul 23 peut ainsi déduire, de manière pratique et rapide, la hauteur de l'interface I à l'interface entre les deux groupes de transducteurs. La hauteur de l'interface I est supérieure à tout transducteur 22 à l'état inférieur ET1 (présence de fluide) et inférieure à tout transducteur 22 à l'état supérieur ET2 (absence de fluide). Dans cet exemple, en référence à la figure 4, les transducteurs 22a-22d sont à l'état inférieur ET1 tandis que les transducteurs 22e-22g sont à l'état supérieur ET2. On peut ainsi en déduire que l'interface I est située entre le transducteur 22d et le transducteur 22e et donc déterminer le niveau de remplissage $N_R$.

Dans la première forme de réalisation de la figure 4, le réservoir 10 est orienté horizontalement et les transducteurs 22a-22g sont répartis sur la demi-circonférence de la face externe 12 au niveau de la portion cylindrique médiane 13, autrement dit selon une ligne incurvée dans un plan transversal à l'axe X10 du réservoir 10. Dans cet exemple, l'organe de calcul 23 est configuré pour déterminer la présence du premier fluide monophasique $F_1$ en fonction de l'atténuation acoustique.

De manière préférée, les transducteurs 22a-22g sont avantageusement équidistants les uns des autres de sorte à pouvoir déterminer le niveau de remplissage $N_R$ du réservoir 10 avec une précision calibrée au pas des transducteurs 22a-22g. Il va de soi que la densité de transducteurs 22 pourrait être plus élevée à proximité de certains niveaux de remplissage critiques.

Dans cet exemple, les transducteurs 22a-22g sont alignés selon un même plan transversal à l'axe X10 du réservoir 10 mais il va de soi qu'ils pourraient s'étendre, dans une deuxième configuration, selon une pluralité de plans transversaux. En particulier, les transducteurs 22a-22g peuvent s'étendre selon deux plans transversaux espacés de l'ordre de la taille d'un transducteur 22a-22g et répartis en quinconce de sorte à ce que chaque transducteur 22a-22g ait une position verticale différente. Une telle disposition est avantageuse pour posséder une précision importante sans être limité par les dimensions d'un transducteur 22a-22g. Ainsi, la précision peut être supérieure à la dimension du transducteur 22a-22g.

Comme illustré sur les figures 4 et 5, pour un réservoir 10 orienté de manière horizontale, chaque transducteur 22a-22g est positionné selon la tangente à la portion cylindrique médiane 13 de manière à émettre l'onde incidente $O_1$ et réceptionner l'onde réfléchie $O_2$ selon une direction normale à la tangente au point de positionnement dudit transducteur 22a-22g. Comme illustré à la figure 5, l'onde réfléchie $O_2$ se réfléchit principalement selon la même direction que l'onde incidente $O_1$. Comme les transducteurs 22 sont à des hauteurs verticales différentes, les ondes acoustiques incidentes $O_1$ se propagent dans différentes parties du réservoir 10.

Des ondes acoustiques réfléchies $O_2$ sont générées par la réflexion des ondes acoustiques incidentes $O_1$ sur la face interne 14 de la paroi d'émission et se propagent suivant une direction identique mais dans un sens inverse à celui des ondes acoustiques incidentes $O_1$ comme illustré à la figure 4. L'onde acoustique réfléchie $O_2$ peut ainsi être reçue de manière pratique par le transducteur 22 ayant émis l'onde acoustique incidente $O_1$. Du fait de la proximité de la face externe 12 et de la face interne 14, le temps de propagation est court et la mesure est précise, le désalignement entre l'onde acoustique incidente $O_1$ et l'onde acoustique réfléchie $O_2$ étant faible.

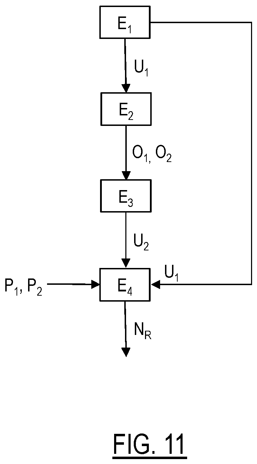

Un exemple de mise en oeuvre d'un procédé de mesure du niveau de remplissage est présenté à la figure 11. Le procédé comprend :

- une étape d'émission $E_1$ par chaque transducteur 22 d'une onde acoustique incidente $O_1$ à la face externe 12 d'une paroi de l'enveloppe 11 suite à la réception d'un premier signal électrique U1,

- une étape de réception $E_2$ d'une onde acoustique réfléchie $O_2$ par chaque transducteur 22 générée par la réflexion de l'onde acoustique incidente $O_1$ sur la face interne 14 de ladite paroi, l'onde acoustique réfléchie $O_2$ n'ayant traversé que la paroi de l'enveloppe 11, le second signal électrique $U_2$ étant fonction de la différence d'énergie acoustique entre l'onde acoustique incidente $O_1$ et l'onde acoustique réfléchie $O_2$.

- une étape de détermination $E_3$ de la présence du premier fluide monophasique $F_1$ à chaque hauteur verticale des transducteurs 22 à partir des signaux électriques $U_1$, $U_2$ et des propriétés physiques $P_1$, $P_2$ des fluides monophasiques $F_1$, $F_2$, en particulier, par comparaison des puissances acoustiques, et

- une étape de détermination $E_4$ du niveau de remplissage $N_R$ en fonction de la présence du premier fluide monophasique $F_1$ à chaque hauteur verticale des transducteurs 22.

Selon l'invention, les ondes acoustiques incidentes $O_1$ se propagent uniquement dans la paroi de l'enveloppe 11 suivant la direction normale au plan tangent à la face externe 12. Autrement dit, les ondes acoustiques incidentes $O_1$ se propagent dans l'épaisseur de la paroi de l'enveloppe 11. Les ondes acoustiques réflé-

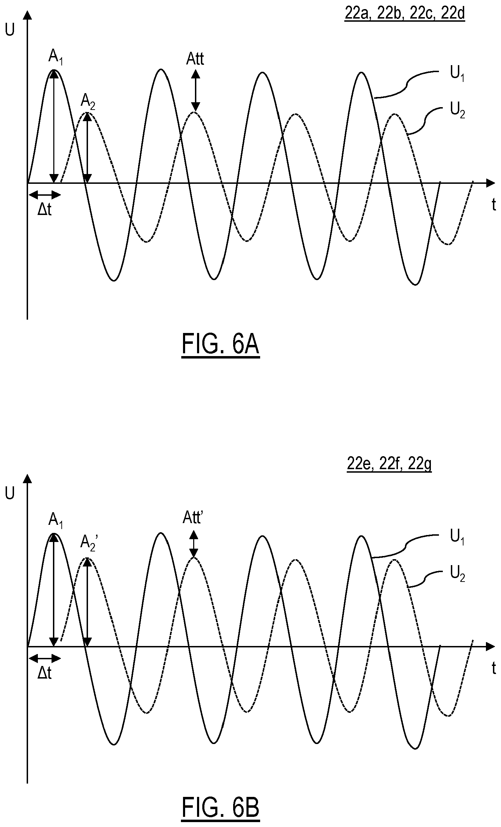

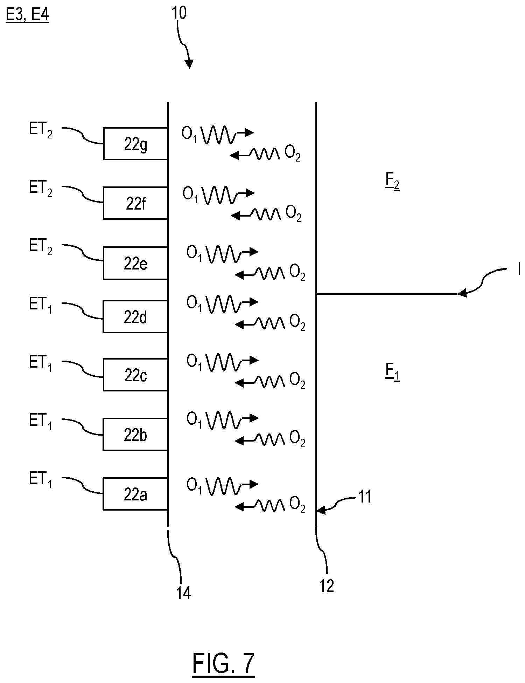

chies $O_2$ sont générées par la réflexion des ondes acoustiques incidentes $O_1$ sur la face interne 14 de la paroi de l'enveloppe 11 et se propagent suivant une direction identique mais dans un sens inverse à celui des ondes acoustiques incidentes $O_1$ comme illustré à la figure 7. De cette façon, chaque onde acoustique réfléchie $O_2$ est générée par réflexion sur la face interne 14 en contact de l'autre côté avec un seul des fluides monophasiques $F_1$, $F_2$. En fonction du fluide monophasique $F_1$, $F_2$ en contact avec la face interne 14, l'énergie acoustique de l'onde réfléchie $O_2$ est différente comme illustré aux figures 6A et 6B. Pour détecter l'onde acoustique réfléchie $O_2$ pertinente, il suffit de surveiller l'onde réfléchie $O_2$ qui est reçue dans un intervalle de temps prédéterminé $\Delta t$ comme illustré aux figures 6A et 6B et de mesurer son amplitude.

A titre d'exemple, chaque transducteur 22a-22g est un piézoélectrique ayant un diamètre de 10 mm, de préférence entre 5 mm et 20 mm. Chaque transducteur 22a-22g a une fréquence comprise entre 0,5 Mhz et 2 Mhz, de préférence de l'ordre de 1 Mhz. L'amplitude est comprise entre 1 et 50V, de préférence, de l'ordre de 10V. De préférence, les étapes d'émission sont espacées de 10 à 100 ms, de préférence, de l'ordre de 20 ms.

A titre d'exemple, en référence à la figure 5, l'énergie acoustique de l'onde réfléchie $O_2$ est plus faible lorsque la face interne 14 est en contact avec le premier fluide monophasique $F_1$ (Figure 6A) qu'avec le deuxième fluide monophasique $F_2$ (Figure 6B). En effet, de manière avantageuse, la paroi de l'enveloppe 11 forme un filtre d'énergie qui permet de caractériser la présence du premier fluide monophasique $F_1$ avec la face interne 14. Une telle détection de la nature du fluide monophasique directement au lieu de mesure permet de s'affranchir des inconvénients liés à la réflexion dans une mesure par temps de transit à travers tout le réservoir.

L'organe de calcul 23 permet de déterminer l'état $ET_1$/$ET_2$ d'un transducteur 22 à partir de la différence d'énergie acoustique entre l'émission de l'onde acoustique incidente $O_1$ et la réception de l'onde acoustique réfléchie $O_2$ qu'il a reçue. Autrement dit, l'organe de calcul 23 détermine l'atténuation acoustique Att correspondant à l'énergie réfléchie divisée par l'énergie incidente comme illustré aux figures 6A et 6B. En effet, la différence de puissance acoustique varie en fonction du fluide monophasique $F_1$, $F_2$ en contact avec la face interne 14.

En pratique, l'organe de calcul 23 est configuré pour comparer la différence d'énergie acoustique au niveau de chaque transducteur 22 à une base de données comportant des atténuations acoustiques de référence des fluides monophasiques $F_1$, $F_2$ pour ledit réservoir 10.

Dans cet exemple, les atténuations acoustiques de référence des fluides monophasiques $F_1$, $F_2$ sont déterminées de manière empirique ou théorique à partir des impédances acoustiques $Z_1$, $Z_2$ des fluides monophasiques $F_1$, $F_2$, de la dimension du réservoir 10, de l'épaisseur de son enveloppe 11, de la nature de son enveloppe 11, etc. De manière préférée, lors de l'installation du système de mesure 20, les atténuations acoustiques de référence des fluides monophasiques $F_1$, $F_2$ sont déterminés par l'installateur, par exemple, lors d'une phase de calibration.

De manière plus précise, l'état $ET_1$/$ET_2$ d'un transducteur 22 est déterminé à partir de l'atténuation d'amplitude de l'onde acoustique réfléchie $O_2$ qu'il a reçue par rapport à celle de l'onde acoustique incidente $O_1$ qu'il a émise. En effet, lorsqu'une onde acoustique est réfléchie sur une interface quelconque, le fluide situé de l'autre côté de l'interface absorbe une partie de l'énergie de l'onde acoustique, ce qui diminue son amplitude. La part d'énergie absorbée dépend de la résistance du fluide, c'est à dire son impédance acoustique, et diffère pour deux fluides monophasiques différents.

En pratique, les impédances acoustiques $Z_1$, $Z_2$ des fluides monophasiques $F_1$, $F_2$ sont calculées à partir des propriétés physiques $P_1$, $P_2$ des fluides monophasiques $F_1$, $F_2$, à savoir leurs masses volumiques théoriques $\rho_1$, $\rho_2$, leurs vitesses de propagation théoriques $V_1$, $V_2$ et leurs températures $T_1$, $T_2$, mesurées dans le réservoir 10. Cependant, il va de soi que les impédances acoustiques $Z_1$, $Z_2$ des fluides monophasiques $F_1$, $F_2$ peuvent être obtenues de manière différente. Dans cet exemple, les températures $T_1$, $T_2$ sont mesurées par un capteur de température et transmises à l'unité de communication relié à l'organe de calcul 23. De manière préférée, l'étape de détermination des impédances acoustiques $Z_1$, $Z_2$ est répétée de manière périodique étant donné que les températures $T_1$, $T_2$ des fluides monophasiques $F_1$, $F_2$ évoluent au cours du temps.

On détermine l'atténuation acoustique selon la formule suivante :

[Math. 1]

$$Att = (Z_2 - Z_1)^2 / (Z_2 + Z_1)^2$$

En pratique, en présence d'un premier fluide monophasique F1 qui est liquide, l'énergie acoustique réfléchie est de l'ordre de 97%. A l'inverse, en présence d'un deuxième fluide monophasique F2 qui est gazeux, l'énergie acoustique réfléchie est de l'ordre de 99,8%.

De manière avantageuse, l'atténuation acoustique mesurée au niveau du transducteur 22a positionné le plus bas peut être assimilée à l'atténuation acoustique du premier fluide monophasique $F_1$. De la même façon, l'atténuation acoustique mesurée au niveau du transducteur 22g positionné le plus haut peut être assimilée à l'atténuation acoustique du second fluide monophasique $F_2$. Ces atténuations acoustiques sont obtenues par une étape de calibration. De manière préférée, l'étape de calibration est répétée de manière périodique étant donné que les impédances sont fonction des températures $T_1$, $T_2$ des fluides monophasiques $F_1$, $F_2$ qui évoluent au

cours du temps.

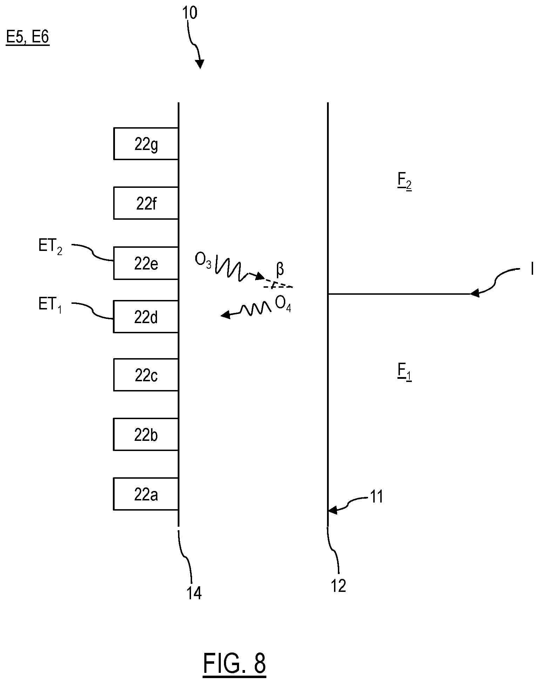

De manière préférée, l'atténuation acoustique est calculée à partir de l'énergie réfléchie reçue par le transducteur ayant émis l'onde incidente $O_1$. Comme illustré aux figures 7 et 8, afin d'augmenter la précision, suite à l'émission d'une onde incidente $O_1$ par un transducteur 22 déterminé, il est également mesuré l'énergie réfléchie reçue par le transducteur 22 située directement sous le transducteur déterminé 22.

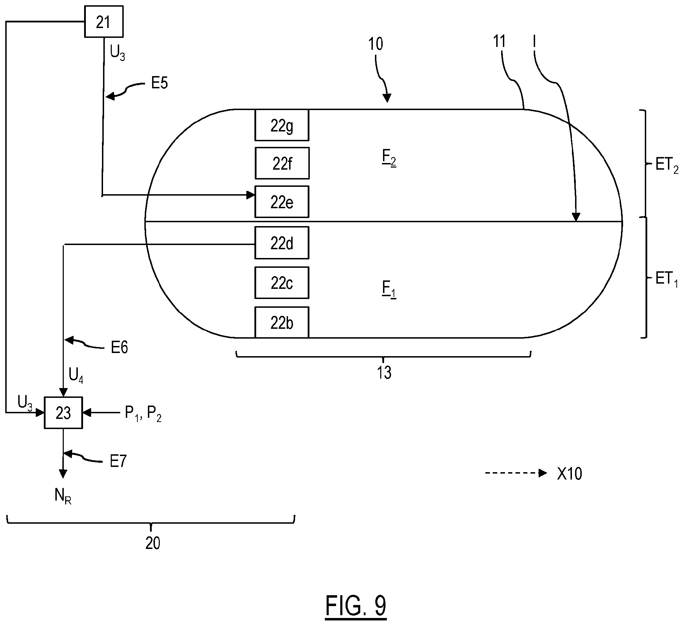

Toujours en référence aux figures 7 et 8, au moins un transducteur 22e est configuré pour émettre, en outre de l'onde incidente $O_1$ (Figure 7), une onde incidente complémentaire $O_3$ (Figure 8) dans l'enveloppe 11 du réservoir 10 suite à la réception d'un troisième signal électrique $U_3$ émis par l'organe de commande 21. Dans cet exemple, la courbure de la paroi a été négligée par souci de clarté. Il va de soi que l'invention s'applique également à une paroi courbée. La trajectoire de cette onde incidente complémentaire $O_3$ est orientée d'un angle de mesure $\beta$ par rapport à celle de l'onde acoustique incidente $O_1$ (direction horizontale), de sorte à générer une onde acoustique réfléchie complémentaire $O_4$ qui est réceptionnée par un transducteur adjacent 22d (situé directement en-dessous). Comme illustré à la figure 9, ce transducteur 22d est quant à lui également configuré pour émettre un quatrième signal électrique $U_4$ vers l'organe de calcul 23, à réception de la seconde onde acoustique réfléchie $O_4$. De manière analogue à précédemment, l'organe de calcul 23 est configuré pour mesurer l'atténuation acoustique au niveau de chaque transducteur 22 (entre le troisième signal électrique $U_3$ et le quatrième signal électrique $U_4$) à une base de données comportant les atténuations acoustiques de référence des fluides monophasiques $F_1$, $F_2$ pour ledit réservoir 10 et pour ledit angle de mesure $\beta$. De manière analogue, lesdites atténuations acoustiques de référence des fluides monophasiques $F_1$, $F_2$ sont déterminées de manière empirique ou théorique.

De manière préférée, l'angle de mesure $\beta$ est compris entre 1° et 15° de manière à permettre de détecter l'interface I de manière précise entre deux transducteurs 22e-22d ayant des états différents $ET_1/ET_2$. Cela permet avantageusement de déterminer si le niveau de remplissage $N_R$ est plus proche du transducteur 22d à l'état inférieur $ET_1$ ou du transducteur 22e à l'état supérieur $ET_2$. Autrement dit, la précision de la mesure du niveau de remplissage $N_R$ est augmentée par cette mesure complémentaire.

De manière avantageuse, le système de mesure 20 permet ainsi de réaliser une double mesure du niveau de remplissage $N_R$ du réservoir 10, permettant un gain à la fois en précision et en fiabilité.

Autrement dit, on mesure l'énergie réfléchie par un transducteur adjacent afin de déterminer de manière plus précise le niveau d'interface I, en particulier, lorsqu'un transducteur est situé au niveau de l'interface.

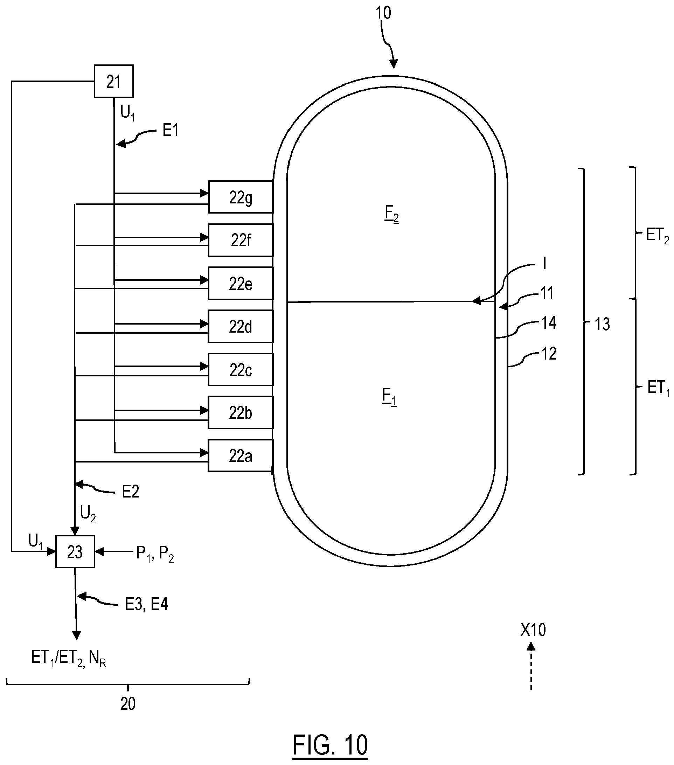

Il a été présenté un réservoir horizontal équipé d'un système de mesure par atténuation d'énergie acoustique mais il va de soi qu'un tel système de mesure 20 est adapté pour un réservoir 10 vertical comme illustré à la figure 10. Dans le cas d'un réservoir 10 vertical, les transducteurs 22a-22g sont répartis sur la portion cylindrique médiane 13 selon la longueur. Au lieu d'être disposés selon une ligne incurvée comme dans le cas d'un réservoir 10 horizontal décrit précédemment, les transducteurs 22a-22g sont positionnés selon une ligne rectiligne verticale, parallèle à l'axe X10 du réservoir 10 vertical.

De même que pour un réservoir 10 horizontal, il va de soi que les transducteurs 22a-22g peuvent être positionnés selon une pluralité de lignes rectilignes verticales, en particulier deux lignes rectilignes verticales espacées de l'ordre d'un transducteur 22a-22g et répartis en quinconce. Ceci présente l'avantage de pouvoir disposer d'un plus grand nombre de transducteurs 22a-22g plus rapprochés et donc d'augmenter la précision de la mesure.

**Revendications**

1. Système de mesure (20) par ondes acoustiques du niveau de remplissage ($N_R$) d'un réservoir (10), ledit réservoir (10) stockant un premier fluide monophasique ($F_1$) ayant des premières propriétés physiques ($P_1$) et un second fluide monophasique ($F_2$) ayant des secondes propriétés physiques ($P_2$), lesdites premières propriétés physiques ($P_1$) comprenant une première masse volumique $\rho_1$ et lesdites secondes propriétés physiques ($P_2$) comprenant une seconde masse volumique $\rho_2$ strictement inférieure à la première masse volumique $\rho_1$ de manière à ce que les fluides monophasiques ($F_1$, $F_2$) soient superposés verticalement dans le réservoir (10), le premier fluide monophasique ($F_1$) étant situé en partie inférieure du réservoir (10), le second fluide monophasique ($F_2$) étant situé en partie supérieure du réservoir (10), ledit premier fluide monophasique ($F_1$) et ledit second fluide monophasique ($F_2$) étant séparés par une interface (I) sensiblement horizontale, ledit réservoir (10) comprenant une enveloppe (11) s'étendant longitudinalement selon un axe X10, l'enveloppe (11) comprenant une face interne en contact avec les fluides monophasiques ($F_1$, $F_2$) et une face externe (12), l'enveloppe (1) comportant une portion médiane cylindrique (13), **système de mesure caractérisé par le fait qu'**il comprend :

   - au moins trois transducteurs (22a-22g) configurés pour être positionnés à des hauteurs verticales différentes sur la face externe (12) de la portion cylindrique (13) de l'enveloppe (11),
   - chaque transducteur (22) étant configuré, d'une part, pour émettre, à réception d'un premier signal électrique ($U_1$), une onde acoustique incidente ($O_1$) à la face externe (12) d'une paroi de l'enveloppe (11) et d'autre part, pour émettre un second signal électrique ($U_2$), à réception d'une onde acoustique réfléchie ($O_2$), correspondant à la réflexion de l'onde acoustique incidente ($O_1$) sur la face interne (14) de ladite paroi, l'onde acoustique réfléchie ($O_2$) n'ayant traversé que la paroi de l'enveloppe (11), le second signal électrique ($U_2$) étant fonction de la différence d'énergie acoustique entre l'onde acoustique incidente ($O_1$) et l'onde acoustique réfléchie ($O_2$).

- au moins un organe de calcul (23) configuré pour déterminer, à partir des signaux électriques ($U_1$-$U_2$) et des propriétés physiques ($P_1$-$P_2$) des fluides monophasiques ($F_1$-$F_2$) la présence du premier fluide monophasique ($F_1$) à chaque hauteur verticale des transducteurs (22) et en déduire le niveau de remplissage ($N_R$), l'organe de calcul (23) étant configuré pour déterminer, pour chaque transducteur (22a-22g), un état inférieur ($ET_1$) en présence du premier fluide monophasique ($F_1$) ou un état supérieur ($ET_2$) en l'absence du premier fluide monophasique ($F_1$), l'organe de calcul (23) est configuré pour déterminer la hauteur de l'interface (I) à partir de la hauteur des deux transducteurs successifs (22e, 22d) dont l'un est à un état inférieur ($ET_1$) et l'autre à un état supérieur ($ET_2$).

2. Système de mesure selon la revendication 1, dans lequel les transducteurs (22) sont alignés selon une ligne dans un plan vertical.

3. Système de mesure selon la revendication 2, dans lequel les transducteurs (22) sont alignés selon une ligne rectiligne.

4. Système de mesure selon l'une des revendications 1 à 3, dans lequel les transducteurs (22a-22g) sont configurés pour émettre des ondes acoustiques incidentes ($O_1$) horizontales.

5. Système de mesure selon l'une des revendications 1 à 4, dans lequel la différence d'énergie acoustique est déterminée à partir des impédances acoustiques ($Z_1$, $Z_2$) des fluides monophasiques ($F_1$, $F_2$).

6. Système de mesure selon l'une des revendications 1 à 5, dans lequel l'organe de calcul (23) est configuré pour comparer les signaux électriques ($U_1$-$U_2$) à une base de données comportant les atténuations acoustiques de référence des fluides monophasiques ($F_1$, $F_2$) pour ledit réservoir (10) pour déterminer la présence du premier fluide monophasique ($F_1$) à chaque hauteur verticale des transducteurs (22).

7. Système de mesure selon l'une des revendications 1 à 6, dans lequel les transducteurs (22a-22g) sont configurés pour émettre, en outre de l'onde incidente ($O_1$), une onde incidente complémentaire ($O_3$) dans la paroi l'enveloppe (11) du réservoir (10), la trajectoire de cette onde incidente complémentaire ($O_3$) étant orientée d'un angle de mesure ($\beta$) par rapport à celle de l'onde acoustique incidente ($O_1$) de sorte à générer une onde acoustique réfléchie complémentaire ($O_4$) qui est réceptionnée par un transducteur adjacent (22d) au transducteur ayant émis les ondes incidentes ($O_1$, $O_3$).

8. Système de mesure selon la revendication précédente, dans lequel l'organe de calcul (23) est configuré pour mesurer l'atténuation acoustique au niveau de chaque transducteur (22) à une base de données comportant les atténuations acoustiques de référence des fluides monophasiques ($F_1$, $F_2$) pour ledit réservoir 10 et pour ledit angle de mesure ($\beta$).

9. Ensemble d'un réservoir et d'un système de mesure selon l'une des revendications précédentes.

10. Procédé de mesure par onde acoustique du niveau de remplissage ($N_R$) d'un réservoir (10), mis en oeuvre au moyen du système de mesure (20) selon l'une des revendications 1 à 8, le procédé comprenant :

    - une étape d'émission ($E_1$) par chaque transducteur (22) d'une onde acoustique incidente ($O_1$) à la face externe (12) d'une paroi de l'enveloppe (11) suite à la réception d'un premier signal électrique ($U_1$),
    - une étape de réception ($E_2$) d'une onde acoustique réfléchie ($O_2$) par chaque transducteur (22) générée par la réflexion de l'onde acoustique incidente ($O_1$) sur la face interne (14) de ladite paroi, l'onde acoustique réfléchie ($O_2$) n'ayant traversé que la paroi de l'enveloppe (11), le second signal électrique ($U_2$) étant fonction de la différence d'énergie acoustique entre l'onde acoustique incidente ($O_1$) et l'onde acoustique réfléchie ($O_2$).
    - une étape de détermination ($E_3$) de la présence du premier fluide monophasique ($F_1$) à chaque hauteur verticale des transducteurs (22) à partir des signaux électriques ($U_1$, $U_2$) et des propriétés physiques ($P_1$, $P_2$) des fluides monophasiques ($F_1$, $F_2$) et
    - une étape de détermination ($E_4$) du niveau de remplissage ($N_R$) en fonction de la présence du premier fluide monophasique ($F_1$) à chaque hauteur verticale des transducteurs (22).

**Patentansprüche**

1.  System zur Messung (20) des Füllstands ($N_R$) eines Behälters (10) durch Schallwellen, wobei der Behälter (10) ein erstes einphasiges Fluid ($F_1$) mit ersten physikalischen Eigenschaften ($P_1$) und ein zweites einphasiges Fluid ($F_2$) mit zweiten physikalischen Eigenschaften ($P_2$) speichert, wobei die ersten physikalischen Eigenschaften ($P_1$) eine erste Volumenmasse $\rho_1$ umfassen und die zweiten physikalischen Eigenschaften ($P_2$) eine zweite Volumenmasse $\rho_2$ strikt unter der ersten Volumenmasse $\rho_1$ umfassen, so dass die monophasischen Fluide ($F_1$, $F_2$) im Behälter (10) vertikal übereinanderliegen, wobei sich das erste einphasige Fluid ($F_1$) im unteren Teil des Behälters (10) befindet, wobei sich das zweite einphasige Fluid ($F_2$) im oberen Teil des Behälters (10) befindet, wobei das erste einphasige Fluid ($F_1$) und das zweite einphasige Fluid ($F_2$) durch eine etwa horizontale Schnittstelle (I) getrennt sind, wobei der Behälter (10) einen Mantel (11) umfasst, der sich längs gemäß einer Achse X10 erstreckt, wobei der Mantel (11) eine Innenseite im Kontakt mit den monophasischen Fluiden ($F_1$, $F_2$) und eine Außenseite (12) umfasst, wobei der Mantel (1) einen zylindrischen mittleren Abschnitt (13) aufweist, wobei das Messsystem **dadurch gekennzeichnet ist, dass** es umfasst:

    - mindestens drei Wandler (22a-22g), die dazu ausgelegt sind, in unterschiedlichen vertikalen Höhen auf der Außenseite (12) des zylindrischen Abschnitts (13) des Mantels (11) positioniert zu sein,
    - wobei jeder Wandler (22) einerseits dazu ausgelegt ist, bei Empfang eines ersten elektrischen Signals ($U_1$) eine einfallende Schallwelle ($O_1$) an der Außenseite (12) einer Wand des Mantels (11) zu senden und andererseits ein zweites elektrisches Signal ($U_2$) bei Empfang einer reflektierten Schallwelle ($O_2$), die der Reflexion der einfallenden Schallwelle ($O_1$) auf der Innenseite (14) der Wand entspricht, zu senden, wobei die reflektierte Schallwelle ($O_2$) nur die Wand des Mantels (11) durchquert hat, wobei das zweite elektrische Signal ($U_2$) von der Schallenergiedifferenz zwischen der einfallenden Schallwelle ($O_1$) und der reflektierten Schallwelle ($O_2$) abhängt,
    - mindestens ein Rechenorgan (23), das dazu ausgelegt ist, aus den elektrischen Signalen ($U_1$-$U_2$) und den physikalischen Eigenschaften ($P_1$-$P_2$) der monophasischen Fluide ($F_1$-$F_2$) die Anwesenheit des ersten einphasigen Fluids ($F_1$) in jeder vertikalen Höhe der Wandler (22) zu bestimmen und daraus den Füllstand ($N_R$) abzuleiten, wobei das Rechenorgan (23) dazu ausgelegt ist, für jeden Wandler (22a-22g) einen un-

    teren Zustand ($ET_1$) bei Anwesenheit des ersten einphasigen Fluids ($F_1$) oder einen oberen Zustand ($ET_2$) bei Abwesenheit des ersten einphasigen Fluids ($F_1$) zu bestimmen, wobei das Rechenorgan (23) dazu ausgelegt ist, die Höhe der Schnittstelle (I) aus der Höhe der zwei aufeinanderfolgenden Wandler (22e, 22d) zu bestimmen, von denen der eine in einem unteren Zustand ($ET_1$) und der andere in einem oberen Zustand ($ET_2$) ist.

2.  Messsystem nach Anspruch 1, wobei die Wandler (22) gemäß einer Linie in einer vertikalen Ebene aufgereiht sind.

3.  Messsystem nach Anspruch 2, wobei die Wandler (22) gemäß einer geraden Linie aufgereiht sind.

4.  Messsystem nach einem der Ansprüche 1 bis 3, wobei die Wandler (22a-22g) dazu ausgelegt sind, horizontale einfallende Schallwellen ($O_1$) zu senden.

5.  Messsystem nach einem der Ansprüche 1 bis 4, wobei die Schallenergiedifferenz aus den akustischen Impedanzen ($Z_1$, $Z_2$) der monophasischen Fluide ($F_1$, $F_2$) bestimmt wird.

6.  Messsystem nach einem der Ansprüche 1 bis 5, wobei das Rechenorgan (23) dazu ausgelegt ist, die elektrischen Signale ($U_1$-$U_2$) mit einer Datenbank zu vergleichen, die die Referenz-Schalldämpfungen der monophasischen Fluide ($F_1$, $F_2$) für den Behälter (10) aufweist, um die Anwesenheit des ersten einphasigen Fluids ($F_1$) in jeder vertikalen Höhe der Wandler (22) zu bestimmen.

7.  Messsystem nach einem der Ansprüche 1 bis 6, wobei die Wandler (22a-22g) dazu ausgelegt sind, neben der einfallenden Welle ($O_1$) eine komplementäre einfallende Welle ($O_3$) in die Wand des Mantels (11) des Behälters (10) zu senden, wobei der Weg dieser komplementären einfallenden Welle ($O_3$) in einem Messwinkel ($\beta$) im Verhältnis zu dem der einfallenden Schallwelle ($O_1$) derart ausgerichtet ist, dass eine komplementäre reflektierte Schallwelle ($O_4$) erzeugt wird, die von einem Wandler (22d) empfangen wird, der dem Wandler benachbart ist, der die einfallenden Wellen ($O_1$, $O_3$) gesendet hat.

8.  Messsystem nach vorangehendem Anspruch, wobei das Rechenorgan (23) dazu ausgelegt ist, die Schalldämpfung im Bereich jedes Wandlers (22) auf der Basis von Daten zu messen, die die Referenz-Schalldämpfungen der monophasischen Fluide ($F_1$, $F_2$) für den Behälter (10) und für den Messwinkel ($\beta$) aufweisen.

9.  Anordnung aus einem Behälter und einem Messsystem nach einem der vorangehenden Ansprüche.

10. Verfahren zur Messung des Füllstands ($N_R$) eines Behälters (10) durch Schallwelle, das mittels des Messsystems (20) nach einem der Ansprüche 1 bis 8 durchgeführt wird, wobei das Verfahren umfasst:

- einen Schritt des Sendens ($E_1$) durch jeden Wandler (22) einer einfallenden Schallwelle ($O_1$) an der Außenseite (12) einer Wand des Mantels (11) nach dem Empfang eines ersten elektrischen Signals ($U_1$),
- einen Schritt des Empfangens ($E_2$) einer reflektierten Schallwelle ($O_2$) durch jeden Wandler (22), die durch Reflexion der einfallenden Schallwelle ($O_1$) auf der Innenseite (14) der Wand erzeugt wird, wobei die reflektierte Schallwelle ($O_2$) nur die Wand des Mantels (11) durchquert hat, wobei das zweite elektrische Signal ($U_2$) von der Schallenergiedifferenz zwischen der einfallenden Schallwelle ($O_1$) und der reflektierten Schallwelle ($O_2$) abhängt,
- einen Schritt des Bestimmens ($E_3$) der Anwesenheit des ersten einphasigen Fluids ($F_1$) in jeder vertikalen Höhe der Wandler (22) ausgehend von den elektrischen Signalen ($U_1$, $U_2$) und den physikalischen Eigenschaften ($P_1$, $P_2$) der monophasischen Fluide ($F_1$, $F_2$) und
- einen Schritt des Bestimmens ($E_4$) des Füllstands ($N_R$) in Abhängigkeit von der Anwesenheit des ersten einphasigen Fluids ($F_1$) in jeder vertikalen Höhe der Wandler (22).

**Claims**

1. An acoustic wave measurement system (20) for measuring the fill level ($N_R$) of a tank (10), said tank (10) storing a first single-phase fluid ($F_1$) having first physical properties ($P_1$) and a second single-phase fluid ($F_2$) having second physical properties ($P_2$), said first physical properties ($P_1$) comprising a first density $\rho_1$ and said second physical properties ($P_2$) comprising a second density $\rho_2$ strictly lower than the first density $\rho_1$ so that the single-phase fluids ($F_1$, $F_2$) are vertically superimposed in the tank (10), the first single-phase fluid ($F_1$) being located in the lower part of the tank (10), the second single-phase fluid ($F_2$) being located in the upper part of the tank (10), said first single-phase fluid ($F_1$) and said second single-phase fluid ($F_2$) being separated by a substantially horizontal interface (I), said tank (10) comprising an envelope (11) extending longitudinally along an axis X10, the envelope (11) comprising an inner face in contact with the single-phase fluids ($F_1$, $F_2$) and an outer face (12), the envelope (1) comprising a cylindrical median portion (13), the measurement system being **characterized in that** it comprises:

- at least three transducers (22a-22g) configured to be positioned at different vertical heights on the outer face (12) of the cylindrical portion (13) of the envelope (11),
- each transducer (22) being configured, on the one hand, to emit, upon receiving a first electric signal ($U_1$), an incident acoustic wave ($O_1$) to the outer face (12) of a wall of the envelope (11) and, on the other hand, to emit a second electric signal ($U_2$), upon receiving a reflected acoustic wave ($O_2$), corresponding to the reflection of the incident acoustic wave ($O_1$) on the inner face (14) of said wall, the reflected acoustic wave ($O_2$) having passed only through the wall of the envelope (11), the second electric signal ($U_2$) being a function of the difference in acoustic energy between the incident acoustic wave ($O_1$) and the reflected acoustic wave ($O_2$),
- at least one calculation member (23) configured to determine, from the electric signals ($U_1$-$U_2$) and physical properties ($P_1$-$P_2$) of the single-phase fluids ($F_1$, $F_2$), the presence of the first single-phase fluid ($F_1$) at each vertical height of the transducers (22) and to deduce the fill level ($N_R$) therefrom, the calculation member (23) being configured to determine, for each transducer (22a-22g), a lower state ($ET_1$) in the presence of the first single-phase fluid ($F_1$) or an upper state ($ET_2$) in the absence of the first single-phase fluid ($F_1$), the calculation member (23) is configured to determine the height of the interface (I) from the height of the two successive transducers (22e, 22d), one of which is in a lower state ($ET_1$) and the other in an upper state ($ET_2$).

2. The measurement system according to claim 1, wherein the transducers (22) are aligned along a line in a vertical plane.

3. The measurement system according to claim 2, wherein the transducers (22) are aligned along a rectilinear line.

4. The measurement system according to one of claims 1 to 3, wherein the transducers (22a-22g) are configured to emit horizontal incident acoustic waves ($O_1$).

5. The measurement system according to one of claims 1 to 4, wherein the difference in acoustic energy is determined from acoustic impedances ($Z_1$, $Z_2$) of the single-phase fluids ($F_1$, $F_2$).

6. The measurement system according to one of claims 1 to 5, wherein the calculation member (23) is configured to compare the electric signals ($U_1$-$U_2$) to a database comprising reference acoustic attenuations of the single-phase fluids ($F_1$, $F_2$) for said tank (10) to determine the presence of the first single-phase fluid ($F_1$) at each vertical height of the transducers (22).

7. The measurement system according to one of claims 1 to 6, wherein the transducers (22a-22g) are configured to emit, further to the incident wave ($O_1$), a complementary incident wave ($O_3$) in the wall of the envelope (11) of the tank (10), the trajectory of this complementary incident wave ($O_3$) being oriented by a measurement angle ($\beta$) with respect to that of the incident acoustic wave ($O_1$) so as to generate a complementary reflected acoustic wave ($O_4$) which is received by a transducer (22d) adjacent to the transducer having emitted the incident waves ($O_1$, $O_3$).

8. The measurement system according to the preceding claim, wherein the calculation member (23) is configured to measure the acoustic attenuation at each transducer (22) to a database comprising reference acoustic attenuations of the single-phase fluids ($F_1$, $F_2$) for said tank 10 and for said measurement angle ($\beta$).

9. An assembly of a tank and a measurement system according to one of the preceding claims.

10. An acoustic wave measurement method for measuring the fill level ($N_R$) of a tank (10), implemented by means of the measurement system (20) according to one of the claims 1 to 8, the method comprising:

   - a step of emitting ($E_1$) by each transducer (22) an incident acoustic wave ($O_1$) to the outer face (12) of a wall of the envelope (11) following the reception of a first electric signal ($U_1$),
   - a step of receiving ($E_2$) a reflected acoustic wave ($O_2$) by each transducer (22), generated by the reflection of the incident acoustic wave ($O_1$) on the inner face (14) of said wall, the reflected acoustic wave ($O_2$) having passed only through the wall of the envelope (11), the second electric signal ($U_2$) being a function of the difference in acoustic energy between the incident acoustic wave ($O_1$) and the reflected acoustic wave ($O_2$)
   - a step of determining ($E_3$) the presence of the first single-phase fluid ($F_1$) at each vertical height of the transducers (22) from the electric signals ($U_1$, $U_2$) and the physical properties ($P_1$, $P_2$) of the single-phase fluids ($F_1$, $F_2$) and
   - a step of determining ($E_4$) the fill level ($N_R$) as a function of the presence of the first single-phase fluid ($F_1$) at each vertical height of the transducers (22).

FIG. 1

FIG. 2

X100

205

$O_1$

$\underline{G}$

101

$h_a$

$O_1$

$\underline{L}$

206

$N_R$

$h_b$

100 102

$$\underline{\text{FIG. 4}}$$

E1, E2, E3

FIG. 5

22a, 22b, 22c, 22d

FIG. 6A

22e, 22f, 22g

FIG. 6B

E3, E4    10

ET$_2$ ⌐ 22g    O$_1$ ⋁⋁⋁→    ←⋏⋏ O$_2$

ET$_2$ ⌐ 22f    O$_1$ ⋁⋁⋁→    ←⋏⋏ O$_2$    F$_2$

ET$_2$ ⌐ 22e    O$_1$ ⋁⋁⋁→    ←⋏⋏ O$_2$

ET$_1$ ⌐ 22d    O$_1$ ⋁⋁⋁→    ←⋏⋏ O$_2$    I

ET$_1$ ⌐ 22c    O$_1$ ⋁⋁⋁→    ←⋏⋏ O$_2$    F$_1$

ET$_1$ ⌐ 22b    O$_1$ ⋁⋁⋁→    ←⋏⋏ O$_2$

ET$_1$ ⌐ 22a    O$_1$ ⋁⋁⋁→    ←⋏⋏ O$_2$    11

14    12

## FIG. 7

E5, E6

## FIG. 8

21

FIG. 9

FIG. 10

$$E_1$$

$U_1$

$$E_2$$

$O_1, O_2$

$$E_3$$

$U_2$

$P_1, P_2 \rightarrow$  $E_4$  $\leftarrow U_1$

$N_R$

## FIG. 11

**EP 3 914 882 B1**

**Documents brevets cités dans la description**

- FR 2949559 A1
- US 2012259560 A1
- US 2016320226 A1
- US 5755136 A1
- GB 2302946 A
- FR 1871656